# EUROPÄISCHE PATENTSCHRIFT

(11) **EP 2 335 343 B1**
(45) Veröffentlichungstag und Bekanntmachung des Hinweises auf die Patenterteilung: **10.10.2018**
(21) Anmeldenummer: 09781402.4
(22) Anmeldetag: 03.08.2009
(51) Int. Cl.: H02K 29/12, H02P 6/182, H02K 3/12

(54) **LAGEERKENNUNG MITTELS BEMF NULLDURCHGANG ERKENNUNG EINES ROTORS EINER ELEKTRONISCH KOMMUTIERTEN ELEKTRISCHEN MASCHINE MIT ZWEI STRÄNGEN UNTERSCHIEDLICHER INDUKTIVITÄT**
POSITIONAL RECOGNITION USING BEMF ZERO CROSSOVER RECOGNITION OF A ROTOR OF AN ELECTRONICALLY COMMUTATED ELECTRIC MACHINE WITH TWO COIL SECTIONS OF DIFFERENT INDUCTANCES
DÉTECTION DE LA POSITION AU PASSAGE DE LA FCÉM PAR ZÉRO, DÉTECTION DE LA POSITION D'UN ROTOR D'UNE MACHINE ÉLECTRIQUE SANS BALAIS AVEC DEUX BRINS D'INDUCTANCES DIFFÉRENTES

(30) Priorität: 08.09.2008 DE 102008041856
(43) Veröffentlichungstag der Anmeldung: 22.06.2011
(73) Patentinhaber: Robert Bosch GmbH, 70442 Stuttgart (DE)
(72) Erfinder: KRAUTH, Wolfgang, 77855 Achern-Sasbachried (DE); REHAGEN, Johannes, 77855 Achern (DE); TIMM, Eike Hermann, 31224 Peine (DE)
(86) Internationale Anmeldenummer: PCT/EP2009/060008
(87) Internationale Veröffentlichungsnummer: WO 2010/026008

(56) Entgegenhaltungen:
- EP-A- 0 802 613
- EP-A- 1 701 437
- JP-A- 2007 028 889
- US-A1- 2006 197 479

## Beschreibung

Die Erfindung betrifft ein Verfahren zur Lageerkennung eines Rotors einer elektronisch kommutierten elektrischen Maschine, insbesondere eines Elektromotors, bei dem ein Nulldurchgang einer in einem Strang des Rotors oder Stators induzierten Spannung zur Lageerkennung verwendet wird und zur Ermittlung des Nulldurchgangs der Strang kurzzeitig stromlos geschaltet wird.

### Stand der Technik

Die EP 0 802 613 A2 offenbart einen bürstenlosen Gleichstrommotor, der für sensorlose Kommutierungssteuerung der Arbeitswicklungen ausgelegt ist. Um insbesondere bei niederen Drehzahlen des Motors eine ausreichende Induktionsspannung zur Kommutierungssteuerung zu erhalten, sind zusätzlich zu den Arbeitswicklungen des Motors Hilfswicklungen vorhanden, an welchen die Induktionsspannung abgegiffen wird.

Für eine elektronische Kommutierung einer elektrischen Maschine mit einem Rotor und einem Stator wird Kenntnis über eine Lage des Rotors der elektrischen Maschine benötigt. Diese kann mittels einer Lageerkennung erlangt werden. Lageerkennungen des Rotors können sowohl mittels Sensoren als auch sensorlos erfolgen. Die elektronisch kommutierte elektrische Maschine besitzt typischerweise mindestens einen Strang, bestehend aus mindestens einer Wicklung, der dem Rotor oder dem Stator zugeordnet ist. Die Wicklung bildet mit der Kommutation einen an- und abschaltbaren Elektromagneten. Der Teil der elektrischen Maschine, der nicht den Strang aufweist, also der Stator oder der Rotor, weist vorzugsweise mindestens einen Permanentmagneten auf, der mit dem Strang zusammenwirkt und eine Drehung des Rotors bewirkt. Der Permanentmagnet kann auch durch einen Elektromagneten ersetzt sein. Für die sensorlose Lageerkennung des Rotors wird ein Nulldurchgang einer durch den Permanentmagneten in den Strang induzierten elektrischen Spannung in der elektrischen Maschine detektiert. Die induzierte Spannung wird zu diesem Zweck innerhalb des Strangs gemessen. Um den Nulldurchgang erfassen zu können, muss der Strang stromlos geschaltet sein, das heißt er darf nicht von außen bestromt werden. Dies resultiert daraus, dass innerhalb des Strangs für eine Kraftbildung, die den Rotor antreibt, gilt, dass diese aus einem Wirkungsgrad, der Summe aller induzierten Spannungen sowie des Strangsstroms abhängt.

Dies bedeutet, dass in einem angenommenen, physikalisch idealen Strang der Strom innerhalb des Strangs in Phase mit der induzierten Spannung fließt. Daraus ergibt sich, dass der Strom im Strang die induzierte Spannung überdeckt, sodass eine Messung des Nulldurchgangs nicht ohne entsprechende Maßnahmen möglich ist. Aus diesem Grund wird vor einem erwarteten Nulldurchgang der Strom im Strang abgeschaltet und erst nach dem Nulldurchgang wieder eingeschaltet.

Nachteilig ist es, dass das Abschalten des Strangs bedeutet, dass für die Zeitdauer des Abschaltens der abgeschaltete Strang keine Kraftbildung vornehmen und damit keine Leistung erzeugen kann. Die elektrische Maschine verliert somit an Leistungsdichte. Eine einfache Verkleinerung der Zeitdauer, in der der Strang stromlos geschaltet ist, um damit eine Steigerung der Leistungsdichte der elektrischen Maschine herbeizuführen, führt zur Steigerung einer Wahrscheinlichkeit einer falschen Kommutierung. Dies begründet sich darauf, dass die jeweils folgende Abschaltung des Strangs aufgrund der Rotordrehzahl und einer zu erwartenden Drehzahländerung berechnet wird. Daraus ergibt sich wenn die Zeitspanne verkleinert wird, dass lediglich geringe Drehzahländerungen berücksichtigt werden können, da der Nulldurchgang innerhalb dieser Zeitspanne liegen muss. Aus diesem Grund wird bei elektrischen Maschinen mit geringer Drehzahländerung über die Zeit nicht jeder Nulldurchgang gemessen, sondern ein oder mehrere Nulldurchgänge übersprungen. Dieses Vorgehen führt zu einer - über die Betriebszeit der elektrischen Maschine gesehen - höheren Leistungsdichte der elektrischen Maschine. Muss jedoch aufgrund einer hohen Drehzahldynamik der elektrischen Maschine, also starken und häufigen Drehzahländerungen, der Nulldurchgang sehr oft erfasst werden, so kann die Leistungsdichte nur dadurch erhalten werden, dass die Zeitspanne in der der Strang abgeschaltet ist, möglichst klein gehalten wird. Aus diesem Grund wird ein Verfahren benötigt, welches ermöglicht, dass der Strang möglichst kurz vor einem erwarteten Nulldurchgang abgeschaltet und schnell nach dem Nulldurchgang wieder eingeschaltet werden kann.

### Offenbarung

Die Erfindung ist im Anspruch 1 offenbart.

Es ist ein Rotor/Stator vorgesehen, der mindestens zwei Stränge aufweist, von denen der eine eine gegenüber dem anderen kleinere Induktivität aufweist und dass für die Lageerkennung vorzugsweise nur der Strang mit der kleinen Induktivität verwendet wird. Die kleinere Induktivität führt dazu, dass der Strang schneller abgeschaltet und schneller eingeschaltet werden kann, als der Strang mit der größeren Induktivität. Vorzugsweise ist eine elektrische Maschine vorgesehen, welche dem dem Strang zugehörigen Rotor/Stator einen Stator/Rotor zuordnet, welcher mindestens einen, vorzugsweise mehrere Permanentmagnete aufweist. Die Lageerkennung verwendet dann die Spannung, welche von den Permanentmagneten in den Strang induziert wird, wodurch eine sensorlose Kommutierung ermöglicht wird. Jeder der Stränge besitzt mindestens eine Wicklung, welche um einen Wicklungskern gewickelt ist und somit ein elektrisches Feld aufbaut, welches in Wechselwirkung mit dem Permanentmagneten steht. Der Permanentmagnet kann auch durch einen Elektromagneten ersetzt sein. Bei Rotation des Rotors induziert der Permanentmagnet die elektrische Spannung, eine elektrische Wechselspannung, in den Strang. Liegt eine der Wicklungen mittig innerhalb des Magnetfelds des Permanentmagneten, so ergibt sich innerhalb der Wicklung ein Nulldurchgang für die induzierte Spannung.

Nach einer Weiterbildung der Erfindung ist vorgesehen, dass durch den Nulldurchgang herum ein Messfenster gebildet wird, das mit Abkommutation des Stromlosschaltens beginnt und nach dem Nulldurchgang der induzierten Spannung beendet wird. Das Messfenster beginnt mit Abkommutation des Stromlosschaltens. Die Abkommutation beschreibt den Vorgang, der in der Zeitspanne abläuft, die vom Beginn des Abschaltens bis zur Herstellung des stromlosen Zustands innerhalb des Strangs benötigt wird. Das Messfenster entspricht der Zeitspanne, die der Strang vollständig stromlos geschaltet ist. In einem generatorischen Betrieb der elektrischen Maschine kann diese Spannung direkt erfasst und ausgewertet werden. In einem motorischen Betrieb der elektrischen Maschine wird die induzierte Spannung durch den in den Strang zugeführten elektrischen Strom überlagert und kann nicht erfasst werden. Um dennoch eine Messung vornehmen zu können, wird der nächste zu erwartende Nulldurchgang ermittelt und der in den Strang geführte Strom möglichst kurz vor dem erweiterten Nulldurchgang abgeschaltet, sodass die induzierte Spannung in dem Strang erfasst werden kann, wodurch das Messfenster entsteht. Dabei ist es von Vorteil, wenn der Strang aus mehreren winkelversetzt zueinander angeordneten Wicklungen besteht. Insbesondere ist es von Vorteil, wenn jeder der Wicklungen ein Permanentmagnet zugeordnet ist. Diese sind vorzugsweise in gleicher Weise winkelversetzt zueinander angeordnet. Dann ergibt es sich, dass in allen Wicklungen gleichzeitig ein Nulldurchgang erzeugt wird und somit ein Nulldurchgang im gesamten Strang vorliegt. Die Lageerkennung des Rotors gibt bei einer Mehrzahl an Wicklungen und/oder Permanentmagneten eine relative Lage des Rotors an, nämlich die Lage einer der Wicklungen zu einem der Permanentmagnete. Ein Abschalten eines der Stränge, das Abkommutieren, bedarf einer gewissen Abschaltzeit aufgrund der induktiven Eigenschaften des Strangs. Die Dauer der Abschaltzeit wird hauptsächlich von der Induktivität des Strangs beeinflusst. Aufgrund der Verringerung der Induktivität einer der Stränge, kann dieser Strang schneller an- und abgeschaltet werden als der Strang mit höherer Induktivität. Das schnellere An- und Abschalten ermöglicht, dass der Strang länger bis zum Stromlosschalten bestromt werden kann und schneller nach dem Anschalten ein kraftbildendes und damit leistungserzeugendes Magnetfeld aufbaut, wodurch eine höhere Leistungsdichte der elektrischen Maschine erreicht wird. Somit ist mit Vorteil vorgesehen, dass der Strang mit kleinerer Induktivität als Messstrang verwendet wird. Aufgrund der Verwendung unterschiedlicher Induktivitäten der Stränge bilden diese einen asymmetrischen Magnetkreis im Stator/Rotor. Diese Asymmetrie kann durch eine geeignete Stator- und/oder Rotorauslegung weitgehend ausgeglichen werden. Dies führt zu einer Verbesserung der Akustik der elektrischen Maschine. Ferner ist es denkbar, aufgrund des erfindungsgemäßen Vorgehens, den Zeitpunkt des Abschaltens zurückzuverlegen, wodurch die Leistungsdichte beibehalten, das Messfenster vergrößert und eine Robustheit der elektronischen Kommutierung erhöht wird. Somit wird entweder der Zeitpunkt des Abschaltens beibehalten, wodurch aufgrund des schneller abklingenden Stroms das stromlose Messfenster länger wird, oder der Strom wird später abgeschaltet und es wird damit länger bestromt, wodurch das Messfenster beibehalten wird. Auch ist eine Kombination der beiden Möglichkeiten denkbar, sodass ein adaptives, dynamisches System in Abhängigkeit der aktuell vorliegenden Drehzahldynamik der elektrischen Maschine und der Höhe des Stroms innerhalb des Strangs abhängig ist.

Nach einer Weiterbildung der Erfindung ist vorgesehen, dass ein Rotor/Stator mit Statorzähnen verwendet wird, die jeweils mindestens einen Zahnfuß und mindestens einen Zahnkopf aufweisen, wobei um die Zahnfüße des Rotors/Stators einer der Stränge und um die Zahnköpfe des Rotors/Stators ein anderer der Stränge angeordnet ist und für die kleinere Induktivität der sich um die Zahnköpfe befindende Strang verwendet wird. Diese Anordnung ermöglicht unterschiedliche Induktivitäten in den Strängen, wobei die Stränge die gleiche Flussverkettung zum Luftspalt aufweisen. Unter Flussverkettung wird eine Verkettung eines Erregerflusses in die Wicklungen verstanden, beispielsweise durch Permanentmagneten oder Erregerspulen. Daraus ergibt sich, dass sich die Stränge bei gleicher Windungszahl und gleichem Strangstrom nahezu identisch auf die Leistungsdichte der elektrischen Maschine auswirken, da vergleichbare Ströme vergleichbare Anteile am Gesamtdrehmoment der elektrischen Maschine herbeiführen. Die Statorzähne sind vorzugsweise radial angeordnet, sodass in radialer Richtung gesehen der Zahnkopf auf den Zahnfuß geschichtet ist. Insbesondere ergibt sich daraus, dass der Strang, der den Zahnköpfen zugeordnet ist, die geringere Induktivität aufweist.

### Kurze Beschreibung der Zeichnungen

Die Figuren zeigen eine vorteilhafte Ausführungsform der Erfindung und zwar zeigt:
- Figur 1: einen Ausschnitt einer elektrischen Maschine mit einer ersten Bestromung,
- Figur 2: den Ausschnitt der elektrischen Maschine mit einer zweiten Bestromung und
- Figur 3: ein Strom-/Spannungs-Zeit-Diagramm.

### Ausführungsform(en) der Erfindung

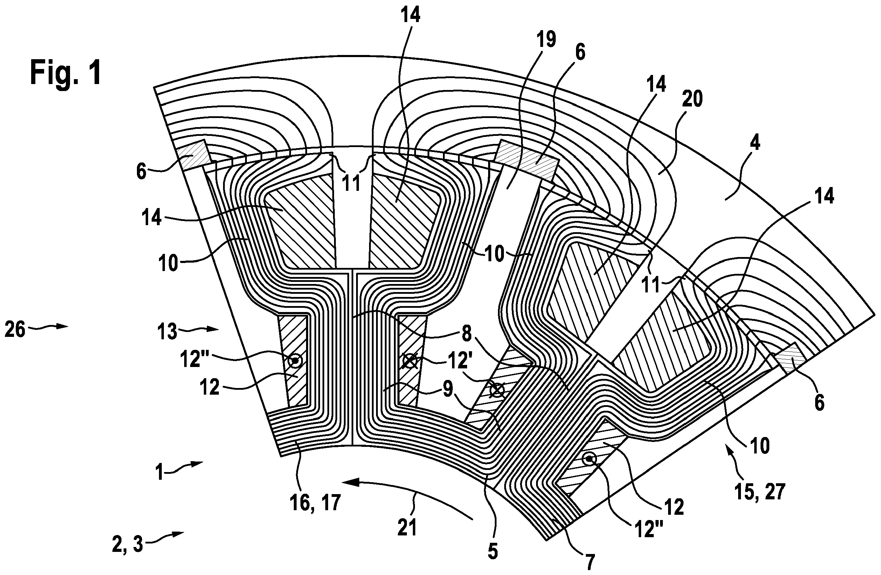

Die Figur 1 zeigt einen Ausschnitt 1 einer im Querschnitt dargestellten elektrischen Maschine 2, die als Elektromotor 3 ausgebildet ist. In dem Ausschnitt 1 ist der Stator 5 sowie ein Rotor 4 bereichsweise dargestellt. Der Rotor 4 ist ein außen laufender Rotor 4, welcher sich um den Stator 5 dreht und diesen umschließt und besitzt eine Mehrzahl an Permanentmagneten 6, welche entlang der Umfangsrichtung des Rotors 4 gleichmäßig verteilt sind. Sowohl der Rotor 4 als auch die Permanentmagnete 6 sind nur schematisch dargestellt, um eine Funktionsweise der elektrischen Maschine 2 zu verdeutlichen. Der Stator 5 besteht aus einem kreisringförmigen Basiselement 7, auf welchem Statorzähne 8 angeordnet sind. Die Statorzähne 8 erstrecken sich radial von dem Basiselement 7 weg und weisen jeweils einen Zahnfuß 9 auf, welcher an dem Basiselement 7 angebracht ist. Jeder Zahnfuß 9 trägt zwei Zahnköpfe 10, die im Querschnitt betrachtet bogenförmig verlaufen, sodass Bogenenden 11 zweier Zahnköpfe 10 eines Zahnfußes 9 zueinander orientiert angeordnet sind. Um jeden Zahnfuß 9 herum ist eine Zahnfußwicklung 12 angeordnet. Die Zahnfußwicklungen 12 sind zu einem ersten Strang 13 zusammengeschaltet. Bei Bestromung des ersten Strangs 13 ergeben sich die in Figur 1 dargestellten Stromlaufrichtungen für den ersten Strang 13. Ein Kreis 12' mit einem Kreuz zeigt eine Stromlaufrichtung in die Papierebene hinein an und ein Kreis 12" mit einem konzentrischen Punkt zeigt eine Stromlaufrichtung aus der Papierebene heraus an. Somit ergibt sich für die Stromlaufrichtungen entsprechend der Darstellung, dass Wicklungsbereiche, welche zwischen zwei Zahnfüßen 9 in Umfangsrichtung benachbart angeordnet sind, die gleiche Stromlaufrichtung aufweisen. Den Zahnköpfen 10 sind paarweise Zahnkopfwicklungen 14 zugeordnet. Die von einer Zahnkopfwicklung 14 umwickelten Zahnköpfe 10 sind jeweils einem anderen Statorzahn 8 zugehörig. Daraus ergibt sich, dass in Figur 1 lediglich eine Zahnkopfwicklung 14 vollständig im Querschnitt dargestellt ist, wohingegen zwei weitere Zahnkopfwicklungen 14 lediglich zur Hälfte dargestellt sind. Die Zahnkopfwicklungen 14 sind miteinander zu einem zweiten Strang 15 verschaltet. Der in der Figur dargestellte zweite Strang 15 ist stromlos. Innerhalb des Stators 5 ist ein aufgrund der bestromten Zahnfußwicklungen 12 verlaufender Magnetfluss 16 in Form von Magnetflusslinien 17 dargestellt. Es ergibt sich der Magnetfluss 16, welcher von zwei Zahnfußwicklungen 12 über zwei Zahnköpfe 10 zweier unterschiedlicher Statorzähne 8 gebildet wird. Die beiden Zahnköpfe 10 sind beabstandet zueinander angeordnet, sodass sich ein Luftspalt 19 zwischen den Zahnköpfen 10 bildet. Die Zahnköpfe 10 bilden dadurch ein Magnetfeld 20 aus, welches von einem der Zahnköpfe 10 zum anderen Zahnkopf 10 fließt. Der Rotor 4 ist in der Figur in einer Drehposition derart angeordnet, dass sich der Permanentmagnet 6 in der Mitte des Magnetfelds 20 befindet und bewegt sich in einer Drehrichtung, welche durch einen Pfeil 21 dargestellt ist. Der Ausschnitt 1 stellt somit einen Feldverlauf des Stators 5 bei bestromtem ersten Strang 13 in freien Raum dar. Ferner ist zu berücksichtigen, dass die Magnetfelder 20 in Umfangsrichtung abwechselnd und unterschiedlich polarisiert sind. Beide, Rotor 4 und Permanentmagnete 6, sind in der Darstellung ohne Einfluss auf die Magnetfelder 20 und Magnetflüsse 16, um das magnetische Verhalten des Stators 5 darstellen zu können.

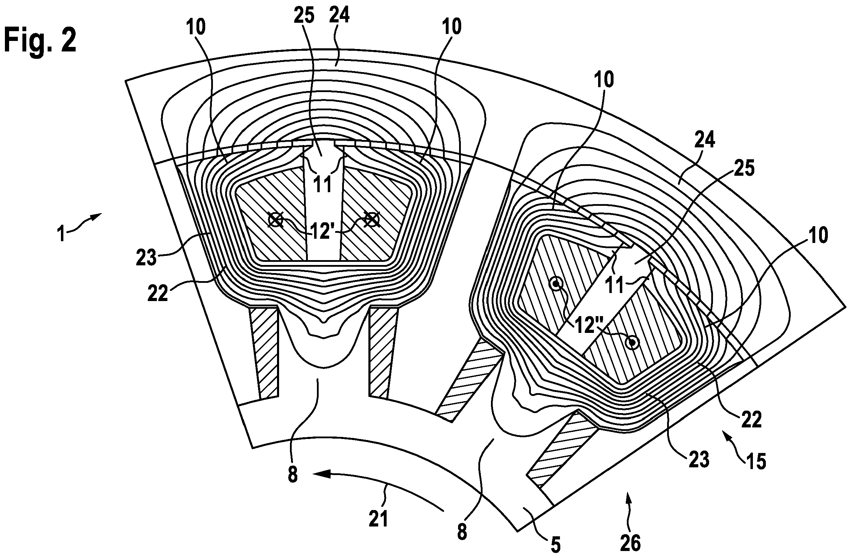

Die Figur 2 zeigt den Ausschnitt 1 der Figur 1 mit seinen Merkmalen. Im Gegensatz zu Figur 1 ist in der Figur 2 der zweite Strang 15 bestromt, welches mittels der Kreise 12' und 12", mit der gleichen Bedeutung wie in Figur 1, dargestellt ist. Der erste Strang 13 ist hier stromlos geschaltet. Aufgrund der Bestromung des zweiten Strangs 15 ergibt sich ein zweiter Magnetfluss 22 an jedem der Statorzähne 8. Der zweite Magnetfluss 22 wird mittels Magnetfeldlinien 23 dargestellt und verläuft durch zwei Zahnköpfe 10 eines einzigen Statorzahns 8. Aufgrund des zweiten Magnetflusses 22 bilden sich Magnetfelder 24, welche von einem der Zahnköpfe 10 zum anderen der Zahnköpfe 10 an einem Statorzahn 8 fließen, wobei sie jeweils einen Luftspalt 25 zwischen zwei Bogenenden 11 der Statorköpfe 10 überbrücken. In diesem Bestromungszustand des Stators 5 ergibt sich eine Lage der Magnetfelder 24, die in dem den Stator 5 umgebenden Raum im Vergleich zu Figur 1 um eine Nutteilung versetzt ist. Die Magnetfelder 20 und 24 unterscheiden sich in der Position, aber wegen der gleichen Flussverkettung der Stränge 13 und 15 sind sie in ihrer magnetischen Ausprägung bei gleichem Strangstrom nicht oder kaum unterschiedlich. Ferner ist zu berücksichtigen, dass die Magnetfelder 24 in Umfangsrichtung abwechselnd unterschiedlich polarisiert sind.

Die Figuren 1 und 2 ermöglichen einen Vergleich der Feldausprägungen der Magnetfelder 20 und 24 der beiden Stränge 13 und 15 bei unterschiedlicher Induktivität der Stränge 13 und 15.

Der Elektromotor 3 wird elektronisch kommutiert, wobei die beiden Stränge 13 und 15 gleichzeitig um 90° elektrisch versetzt bestromt werden. Dadurch ergibt sich ein in Umfangsrichtung um den Stator 5 wanderndes Drehfeld. Der erste Strang 13 ist aufgrund seiner Ausgestaltung mit einer höheren Induktivität versehen als der zweite Strang 15. Aufgrund dieser Ausgestaltung ergibt sich aus den beiden Strängen 13 und 15 ein asymmetrischer Magnetkreis 26, welcher nahezu die gleiche Fußverkettung in beiden Strängen 13 und 15 aufweist. Aufgrund dieser Ausgestaltung bilden vergleichbare Ströme innerhalb der Stränge 13 und 15 auch vergleichbare Anteile an einem Gesamtdrehmoment der elektrischen Maschine 2. Aufgrund der geringeren Induktivität des zweiten Strangs 15 wird dieser als Messstrang 27 verwendet.

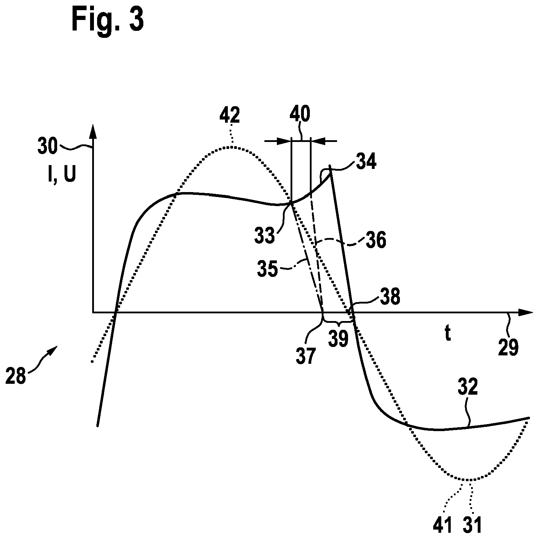

Die Figur 3 zeigt ein kartesisches Koordinatensystem 28 mit einer Abszisse 29 und einer Ordinate 30. Der Abszisse 29 ist die Zeit t und der Ordinate 30 der Rotorstrom I und die induzierte Spannung U des Messstrangs 27 zugeordnet. Innerhalb des kartesischen Koordinatensystems 28 ist die induzierte Spannung U als punktierte Spannungskurve 31 in Sinusform dargestellt. Ferner ist eine solide dargestellte Stromkurve 32 dargestellt, welche eine Bestromung des Stators 5 ohne die Verwendung einer Lageerkennung zeigt. Entlang der Stromkurve 32 sind ein erster Abschaltzeitpunkt 33 und ein zweiter Abschaltzeitpunkt 34 gezeigt. Vom Abschaltzeitpunkt 33 verläuft eine strichpunktierte Stromabschaltlinie 35 rampenförmig zur Abszisse 29 und von dort entlang der Abszisse 29 bis zur Stromkurve 32. Von dem Abschaltzeitpunkt 34 aus verläuft eine gestrichelte Stromabschaltlinie 36 zur Abszisse 29. Sie verläuft in gleicher Weise wie die Stromabschaltlinie 35 bis zur Stromkurve 32 entlang der Abszisse 29. Beide Stromabschaltlinien 35 und 36 treffen am gleichen Stromlospunkt 37 auf die Abszisse 29. Ausgehend vom Stromlospunkt 37 bis nach einem Nulldurchgang 38 der induzierten Spannung ergibt sich ein Messfenster 39. Die Abschaltzeitpunkte 33 und 34 entsprechen den Zeitpunkten des Beginns einer Abkommutation, sodass der Messstrang 27 im Messfenster 39 stromlos geschaltet ist. Das Messfenster 39 wird alle 180° der elektrischen Phase der induzierten Spannung U geöffnet. Ein Pfeil 40 verdeutlicht eine Zeitspanne zwischen den Abschaltzeitpunkten 33 und 34.

In einem generatorischen Betrieb ergibt sich die induzierte Spannung U, deren Verlauf als Spannungskurve 31 dargestellt ist. Dabei ist die in Figur 1 dargestellte Position des Rotors 4 dann gegeben, wenn der Nulldurchgang 38 vorliegt. Die Stromkurve 32 liegt im Messstrang 27 vor, wenn diese in einem rein motorischen Betrieb betrieben wird. Um die Lageerkennung durchführen zu können, wird das Messfenster 39 durch Stromlosschalten des zweiten Strangs 15, des Messstrangs 27, erzeugt. Die Stromabschaltlinie 35 entspricht einer fiktiven Stromabschaltlinie 35, die dann anliegen würde, wenn die beiden Stränge 13 und 15 des Stators 5 die gleiche Induktivität besitzen und damit einen symmetrischen Magnetkreis bilden würden und dient in dieser Anmeldung als Vergleichsmöglichkeit für das erfindungsgemäße Verfahren. Im Gegensatz zur Stromabschaltlinie 35 ist die Stromabschaltlinie 36 steiler, sodass der Abschaltzeitpunkt 34 entlang der Abszisse 29 gegenüber dem Abschaltzeitpunkt 33 nach hinten verschoben werden kann. Daraus ergibt sich die Zeitdifferenz 40. Die Verwendung des zweiten Strangs 15 mit der kleineren Induktivität ermöglicht die Realisierung der Stromabschaltlinie 36. Da beide Stromabschaltlinien 35 und 36 im Stromlospunkt 37 aufeinandertreffen, erzeugen beide das gleiche Messfenster 39, woraus folgt, dass aufgrund des, durch die Erfindung ermöglichten späteren Abschaltzeitpunkts 34 eine längere Bestromung des zweiten Strangs 15 vorgenommen wird. Somit ist ein Zuwachs der Leistungsdichte der elektrischen Maschine 2 gegeben, welcher durch die Fläche zwischen der Stromabschaltlinie 35, der Stromabschaltlinie 36 und der Stromkurve 32 dargestellt ist. Zusätzlich zu diesem Leistungsgewinn beim Abschalten, das heißt Abkommutieren des zweiten Strangs 15, kommt ein Leistungsgewinn in entsprechender Weise beim Anschalten des zweiten Strangs 15. Aufgrund der niedrigeren Induktivität erzeugt der zweite Strang 15 schneller ein kraftbildendes Magnetfeld 24 als ein anderer Strang mit höherer Induktivität. Die Stromanschaltlinien sowie der daraus resultierende Leistungsgewinn sind in der Figur nicht dargestellt.

In einer weiteren Ausgestaltungsform ist es denkbar, dass die dem Strang 15 zugeführte elektrische Leistung beibehalten wird, sodass sich in dem erfindungsgemäßen Verfahren der Stromlospunkt 37 entlang der Abszisse 29 vorverlegt. Dies ist in Figur 3 nicht dargestellt. Daraus ergibt sich, dass das Messfenster 39 vergrößert wird, was zu einer robusteren Lageerkennung führt. Die steigende Robustheit der Messung beugt einer Fehlkommutierung vor, da die Lageerkennung hochgenaue Ergebnisse liefert.

Wird in der in Figur 1 dargestellten Geometrie des Stators 5 der erste Strang 13 bestromt, wirkt sich dies im Luftspalt 19 fast genauso aus, wie wenn der zweite Strang 15 mit gleicher Stromstärke bestromt wird. Dies kennzeichnet die gleiche Flussverkettung trotz asymmetrischer Blechgeometrie und geringfügig abweichender Windungszahlen. Da der erste Strang 13 mehr Material des Stators 5, wie beispielsweise Stahl, in den Statorzähnen 8 mit Magnetfluss 16 durchflutet als der zweite Strang 15, ergibt sich die größere Induktivität des ersten Strangs 13. Beide Magnetflüsse 16 und 22 - die Magnetflusspfade - entlang der Magnetflusslinien 17 und 23 haben gleiche flusssammelnde Flächen in den Luftspalten 19 und 25, was eine vergleichbare Flussverkettung beider Stränge 13 und 15 herbeiführt, mit der Folge, dass beide Stränge 13 und 15 nahezu die gleiche induzierte Spannung U erzeugen. Im Rückschluss dazu bilden vergleichbare Ströme innerhalb der Stränge 13 und 15 auch vergleichbare Anteile am Gesamtdrehmoment der elektrischen Maschine 2. Der asymmetrische Magnetkreis 26 mit nahezu gleicher Flussverkettung in beiden Strängen 13 und 15 verwenden für eine sensorlose Kommutierung den zweiten Strang 15 mit der niederen Induktivität als Messstrang 27. Durch die kleinere Induktivität des Messstrangs 27 lassen sich diese Ströme trotz des Messfensters 39 noch einprägen, sodass ein ausgeglichenes Verhalten der elektrischen Maschine 2 erzeugt wird. Ungleich verteilte elektrische Lasten in beiden Strängen 13 und 15 würden sich auf eine Akustik der elektrischen Maschine 2 ungünstig auswirken. Dabei ist das erfindungsgemäße Verfahren wirtschaftlicher als sämtliche Stränge einer elektrischen Maschine 2 niederinduktiv auszulegen. Ferner würde dies nicht eine Asymmetrie in den Ansteuerkonzepten zwischen Messstrang 27 und anderen Strängen ausgleichen, ohne eine Ausnutzung der elektrischen Maschine 2 nachteilig zu beeinflussen.

Ferner ist denkbar, das beschriebene Verfahren mit einer Vorkommutierung zu verbinden. Dadurch wird die induzierte Spannung U mit einer konstant verschobenen Referenzspannung verglichen, wodurch das Messfenster 39 im kartesischen Koordinatensystem 28 wieder auf der Abszisse liegt. Bei einer Verschiebung in positiver Richtung der Ordinate 30, also in Pfeilrichtung der Ordinate 30, ergibt es sich, dass der Nulldurchgang 38 entlang der Abszisse 29 nach hinten wandert, wodurch ein noch späteres Abschalten möglich ist.

## Patentansprüche

1. Verfahren zur Lageerkennung eines Rotors (4) einer elektronisch kommutierten elektrischen Maschine (2), bei der ein Nulldurchgang (38) einer in einem Strang (13, 15) des Rotors (4) oder eines Stators (5) induzierten Spannung zur Lageerkennung verwendet wird und zur Ermittlung des Nulldurchgangs (38) der Strang (13, 15) kurzzeitig stromlos geschaltet wird, wobei der Rotor (4) oder der Stator (5) mindestens zwei Stränge (13, 15) aufweist, von denen der eine gegenüber dem anderen eine kleinere Induktivität aufweist, **dadurch gekennzeichnet, dass** für die Lageerkennung nur der Strang (15) mit der kleineren Induktivität verwendet wird.

2. Verfahren nach Anspruch 1, **dadurch gekennzeichnet, dass** um den Nulldurchgang (38) herum ein Messfenster (39) gebildet wird, das mit Abkommutation des Stromlosschaltens beginnt und nach dem Nulldurchgang (38) der induzierten Spannung beendet wird.

3. Verfahren nach einem der vorhergehenden Ansprüche, **dadurch gekennzeichnet, dass** der Rotor (4)/Stator (5) mit Statorzähnen (8) verwendet wird, die jeweils mindestens einen Zahnfuß (9) und mindestens einen Zahnkopf (10) aufweisen, wobei um die Zahnfüße (9) des Rotors (4)/Stators (5) einer der Stränge (13) und um die Zahnköpfe (10) des Rotors (4)/Stators (5) ein anderer der Stränge (15) angeordnet ist und für die kleinere Induktivität der sich um die Zahnköpfe (10) befindende Strang (15) verwendet wird.

## Claims

1. Method for identifying the position of a rotor (4) of an electronically commutated electric machine (2), in which a zero crossing (38) of a voltage induced in a winding phase (13, 15) of the rotor (4) or of a stator (5) is used for the position identification and the winding phase (13, 15) is temporarily switched off for the identification of the zero crossing (38), wherein the rotor (4) or the stator (5) has at least two winding phases (13, 15), one of which has a lower inductance than the other, **characterized in that** only the winding phase (15) with the lower inductance is used for the position identification.

2. Method according to Claim 1, **characterized in that** a measurement window (39) is formed around the zero crossing (38), which measurement window begins with commutation of the switching off and is terminated after the zero crossing (38) of the induced voltage.

3. Method according to either of the preceding claims, **characterized in that** the rotor (4)/stator (5) comprising stator teeth (8) is used, which stator teeth each have at least one tooth root (9) and at least one tooth tip (10), wherein one of the winding phases (13) is arranged around the tooth roots (9) of the rotor (4)/stator (5) and another of the winding phases (15) is arranged around the tooth tips (10) of the rotor (4)/stator (5) and the winding phase (15) located around the tooth tips (10) is used for the lower inductance.

## Revendications

1. Procédé de reconnaissance de position d'un rotor (4) d'une machine électrique (2) à commutation électronique, selon lequel un passage par zéro (38) d'une tension induite dans une branche (13, 15) du rotor (4) ou d'un stator (5) est utilisé pour la reconnaissance de position et la branche (13, 15) est brièvement mise hors tension en vue de déterminer le passage par zéro (38), le rotor (4) ou le stator (5) possédant au moins deux branches (13, 15) parmi lesquelles l'une présente une inductance plus faible par rapport à l'autre, **caractérisé en ce que** seule la branche (15) ayant l'inductance la plus faible est utilisée pour la reconnaissance de position.

2. Procédé selon la revendication 1, **caractérisé en ce qu'**une fenêtre de mesure (39) est formée autour du passage par zéro (38), laquelle commence par la déconnexion de la mise hors tension et se termine après le passage par zéro (38) de la tension induite.

3. Procédé selon l'une des revendications précédentes, **caractérisé en ce que** le rotor (4)/stator (5) est utilisé avec des dents de stator (8) qui possèdent respectivement au moins un pied de dent (9) et au moins une tête de dent (10), l'une des branches (13) étant disposée autour des pieds de dent (9) du rotor (4)/stator (5) et une autre des branches (15) autour des têtes de dent (10) du rotor (4)/stator (5) et la branche (15) qui se trouve autour des têtes de dent (10) étant utilisée pour l'inductance la plus faible.
